# NOUVEAU FASCICULE DE BREVET EUROPEEN

(11) **EP 1 080 050 B2**
(45) Date de publication et mention de la décision concernant l'opposition: **30.10.2013**
(45) Mention de la délivrance du brevet: 03.07.2002
(21) Numéro de dépôt: 99920900.0
(22) Date de dépôt: 20.05.1999
(51) Int. Cl.: C04B 40/00, C04B 28/02

(54) **PROCEDE D'OBTENTION D'UN OUVRAGE**
VERFAHREN ZUR HERSTELLUNG EINES ELEMENTS
METHOD OF OBTAINING AN ITEM

(30) Priorité: 20.05.1998 FR 9806506
(43) Date de publication de la demande: 07.03.2001
(73) Titulaire: VICAT, 92095 Paris La Défense Cedex (FR)
(72) Inventeur: CECCALDI, Jean-Dominique, F-26220 Dieulefit (FR)
(74) Mandataire: Guerre, Dominique
(86) Numéro de dépôt international: PCT/FR1999/001204
(87) Numéro de publication internationale: WO 1999/059934

(56) Documents cités:
- EP-A- 0 643 022
- WO-A-96/27565
- DATABASE WPI Section Ch, Week 8933 Derwent Publications Ltd., London, GB; Class L02, AN 89-237638 XP002092043 & JP 01 172252 A (TSURUGA CEMENT KK), 7 juillet 1989 (1989-07-07)
- DATABASE WPI Section Ch, Week 8922 Derwent Publications Ltd., London, GB; Class A93, AN 89-161616 XP002092044 & JP 01 103944 A (OSAKA CEMENT KK), 21 avril 1989 (1989-04-21)
- DATABASE WPI Section Ch, Week 7826 Derwent Publications Ltd., London, GB; Class L02, AN 78-46948A XP002113162 & JP 53 057226 A (SUMITOMO CEMENT CO), 24 mai 1978 (1978-05-24)

## Description

La présente invention concerne un procédé d'obtention d'un ouvrage consistant en une dalle ou chape.

Pour compenser le retrait d'un béton ou mortier, on utilise habituellement un procédé expansif, à savoir qu'une poudre d'aluminium micronisée, un carbure de calcium, une chaux vive, de l'eau oxygénée, un sulfo-aluminate de calcium, ou une poudre de fer, est mélangé à la composition pour mortier ou béton, à l'état sec.

Le gonflement obtenu est de l'ordre de 300 à 800 microns par mètre, à 28 jours. Le retrait du mortier ou béton à l'état durci étant du même ordre, par exemple de 600 microns par mètre pour un mortier normalisé à 28 jours, on obtient normalement un effet anti-retrait.

Le retrait, en théorie, est donc bien compensé mais, dans la réalité, il est très difficile de maîtriser cette expansion ainsi que le moment où celle-ci se produit.

De même, pour limiter le retrait, on peut utiliser divers agents du type acide gras, des éthers de polyalkyiène glycol, etc..., qui ne produisent pas de gonflement, mais permettent de limiter le retrait en agissant sur la tension superficielle de l'eau dans les pores du ciment hydraté. Ce type d'agent, bien que réduisant le retrait à court terme (28 jours), produit en réalité des résultats très limités à plus longue échéance (> 90 jours).

Conformément au document JP-A 5 305 7 226, il est décrit une composition de ciment projetable comprenant un ciment Portland et de l'anhydrite, et qui montre un effet anti-retrait.

Le document EP-A-0643022 concerne une composition de ciment et d'un agent anti-retrait, ce dernier comprenant, préférentiellement un mélange obtenu par la réaction d'un glycol avec une oléfine en milieu acide. Ce mélange comprend un glycol et des éthers de glycol.

Conformément au document JP-A-01-172 252, on a décrit un agent durcisseur pour béton ou mortier, comprenant :
- un gypse, à savoir un sulfate de calcium déshydraté, ou de l'anhydrite, à savoir un sulfate de calcium anhydre,
- de la triéthanolamine ou du diéthylène-glycol,
- et un acide oxycarboxylé ; ou un sel de lignine et d'acide sulfonique.

Dans un tel agent durcisseur, le gypse ou l'anhydrite permet de régulariser le temps de prise du ciment, dans lequel ledit agent durcisseur est incorporé.

Quant à la triéthanolamine ou au diéthylèneglycol, leurs propriétés tensio-actives permettent dans certains cas d'améliorer la résistance mécanique de certains bétons ou mortiers.

La Demanderesse a découvert un nouveau procédé d'obtention d'ouvrages consistant en une dalle ou chape mettant en oeuvre de nouveaux agents anti-retrait, ayant la capacité de créer dans le béton ou le mortier durci, des microstructures spécifiques, avec une plus grande reproductibilité et fiabilité, avec les différents types de ciment rencontrés sur le marché.

Il a été trouvé de façon surprenante qu'un sulfate de calcium, et plus particulièrement un sulfate de calcium anhydre, associé à au moins un éther de glycol, permet d'obtenir une telle microstructure, et convient en tant qu'agent anti-retrait.

Ainsi, la présente invention a pour objet un procédé d'obtention d'un ouvrage consistant en une dalle ou chape, selon lequel :
- on dispose à l'état sec d'une composition comportant un ciment et un agent anti-retrait,
- par gâchage, avec ladite composition, on obtient, à l'état fluide, ou un béton ou un mortier,
- on met en oeuvre et on durcit le béton ou mortier ainsi obtenu caractérisé en ce que l'agent anti-retrait comprend un sulfate de calcium anhydre, associé à au moins un éther de glycol, ledit éther de glycol représentant entre 0,5 et 3% en poids du sulfate de calcium.

Sans que la Demanderesse entende être liée, quant à l'interprétation des revendications ou l'appréciation de la présente invention, par les hypothèses ou explications données ci-après, sa compréhension de cette dernière est la suivante.

Au contact de toute alumine réactive présente dans un ciment, le sulfate de calcium forme normalement avec l'eau, de manière quantitative et en s'expansant, des cristaux d'ettringite ayant une nature différente de celle des hydrates classiques du ciment, en ce qu'ils sont particulièrement sensibles aux variations d'humidité relative, et aux venues d'eau ultérieures.

Lorsque le sulfate de calcium, et en particulier l'anhydrite, sont associés à au moins à un éther de glycol, ils diminuent les tensions hydrauliques internes à l'origine du retrait du béton ou mortier. Cette action modifie la microstructure de ce dernier, à savoir la texture d'assemblage des cristaux hydratés formés, sans modifier la nature de ceux-ci. Le béton ou mortier durci, finalement obtenu, présente alors pratiquement toutes les propriétés obtenues traditionnellement avec un ciment, avec un retrait minimum ou négligeable, et ceci avec une quasi-insensibilité aux variations d'humidité ou aux venues d'eau ultérieures.

Par rapport à d'autres produits chimiquement proches, tels que alkyle-éther-oxyalkylène, ou alkylènediol, les éthers de glycol associés selon la présente invention se distinguent par le fait qu'ils ne contiennent pas de groupes fonctionnels susceptibles de se dégrader par hydrolyse interne, au cours de l'hydratation du ciment, et donc d'interférer avec l'action de l'association sulfate de calcium/éther de glycol sur les tensions hydrauliques.

C'est la texture d'hydratation spécifique, obtenue selon la présente invention, qui confère au mortier ou ciment obtenu, des caractéristiques de résistance en compression suffisamment élevées (15 à 20 MPa à 28 jours), de résistance en flexion suffisamment élevées (3 à 5 MPa à 28 jours), et de module d'élasticité suffisamment faibles (15 000 MPa à 28 jours), et ce avec un retrait minimum. Ceci permet, le cas échéant, au béton ou mortier durci obtenu, d'absorber sans déformation préjudiciable, des contraintes résiduelles dont l'intensité peut être de l'ordre du dixième de la résistance en flexion, à l'échéance de 28 jours.

A titre d'exemple, on prend 30 kg d'un mélange de sulfate de calcium additionné d'éthers de glycol, pour 1m3 de mortier à l'état fluide, dosé à 450 kg de ciment Portland CPJ/CEM II A -32.5 R, avec 1500 kg de sable et 200 litres d'eau.

L'ouvrage obtenu avec un tel mortier à l'état durci est stable et sans retrait, et ses performances mécaniques satisfaisantes.

Les dallages et chapes obtenus selon le procédé de l'invention permettent d'éviter d'avoir recours aux joints de fractionnement et aux treillis anti-fissurations.

Un autre domaine d'utilisation où le non-retrait et la non-fissuration sont très intéressants est la confection de dalles ou chapes étanches utiles dans la construction de fondations de bâtiments, de parkings souterrains, de réservoirs d'eau, de piscines, de centrales nucléaires.

Dans le domaine des sols, la Demanderesse a préparé grâce au procédé selon l'invention des dalles ou chapes autonivelantes. Dans ce cas, il est nécessaire de rajouter un agent fluidifiant de type naphtalène sulfonate, ligno-sulfonate, mélamine sulfonée, ou tout autre type de fluidifiant utilisable avec les liants hydrauliques, un agent épaississant stabilisant anti-sédimentation de type méthylcelullose, biopolymère, cendres volantes, caséine stabilisée, un agent entraîneur d'air de type abiétate de sodium, ou tout autre additif utilisable avec les liants hydrauliques.

Cette liste n'est pas limitative ; à titre d'additif on peut ajouter des accélérateurs, des retardateurs, des agents d'adhérence, des agents anti-mousse, etc...

A titre d'exemple, étant entendu que les proportions suivantes peuvent varier, on a ajouté au mortier à l'état fluide exemplifié plus haut, pour 1m3, 160 g d'agent entraîneur d'air de type abiétate de sodium, 3000 g d'agent fluidifiant de type naphtalène sulfonate, et 50 g d'agent anti-mousse de type silicone.

Le mortier ainsi obtenu peut être pompé et s'étale de lui-même. II suffit de respecter les niveaux à atteindre et d'agiter le mélange pour le débullage.

La chape ainsi fabriquée apporte la même facilité de mise en place qu'une chape autonivelante de type anhydrite, mais avec une moindre sensibilité à l'eau (possibilité de coulage à l'extérieur, résistance aux remontées d'humidité), pour le collage de carrelage dans des délais très courts.

Avec le procédé selon l'invention, il n'existe pas de risque de formation de sels gonflants de type ettringite à l'interface chape/carrelage ou chape/ support béton, sans la nécessité de couches de type primaire pour isoler la colle du support anhydrite, ou la chape anhydrite du support béton.

S'agissant de la composition à l'état sec pour mortier ou béton utilisée dans le procédé de l'invention, les variantes suivantes peuvent-être considérées :
- la composition comporte des fibres, par exemple métalliques, en matière plastique, notamment polypropylène ou polyester, en verre ou carbone,
- préférentiellement, le ciment est du type Portland,
- dans la composition, le sulfate de calcium représente au plus 10 %, et préférentiellement entre 3 et 5% en poids du ciment ; au-delà de 10 %, selon la composition du ciment, de l'ettringite variable quant à sa texture est susceptible de se former,
- la composition comprend en outre un additif choisi dans le groupe constitué par les agents fluidifiants, les agents anti-sédimentation, les agents stabilisants, les agents entraîneurs d'air, et les agents anti-mousse.

L'invention concerne encore une dalle susceptible d'être obtenue par le procédé selon l'invention.

L'invention concerne également une chape susceptible d'être obtenue par le procédé selon l'invention.

## Revendications

1. Procédé d'obtention d'un ouvrage consistant en une dalle ou chape, selon lequel :
- on dispose à l'état sec d'une composition comportant un ciment et un agent anti-retrait,
- par gâchage, avec ladite composition, on obtient, à l'état fluide, ou un béton ou un mortier,
- on met en oeuvre et on durcit le béton ou mortier ainsi obtenu, **caractérisé en ce que** l'agent anti-retrait comprend un sulfate de calcium anhydre, associé à au moins un éther de glycol, ledit éther de glycol représentant entre 0,5 et 3% en poids du sulfate de calcium.

2. Procédé selon la revendication 1, **caractérisé en ce que**, dans ladite composition, le sulfate de calcium représente au plus 10%, et préférentiellement entre 3 et 5% en poids de ciment.

3. Procédé selon la revendication 1, **caractérisé en ce que** ladite composition comprend un additif choisi dans le groupe constitué par les agents anti-sédimentation, les agents stabilisants, les agents entraîneurs d'air, et les agents anti-mousse.

4. Dalle ou chape susceptible d'être obtenue avec un procédé selon l'une quelconque des revendications 1 à 3.

5. Utilisation d'un agent anti-retrait défini par la revendication 1 pour l'obtention d'un ouvrage consistant en une dalle ou chape.

## Patentansprüche

1. Verfahren zum Erhalt eines Bauwerks, bestehend aus einer Steinplatte oder Abdeckung, auf der
- im trockenen Zustand eine Zusammensetzung zur Verfügung steht, die einen Zement und ein Antischrumpfmittel umfasst,
- durch Anmachen mit der Zusammensetzung im flüssigen Zustand entweder ein Beton oder ein Mörtel erhalten wird,
- der so erhaltene Beton oder Mörtel durchgeführt und ausgehärtet wird, **dadurch gekennzeichnet, dass** das Antischrumpfmittel ein wasserfreies Calciumsulfat umfasst, das mindestens mit einem Glykolether assoziiert ist, wobei der Glycolether zwischen 0,5 und 3 Gew% des Calciumsulfats darstellt.

2. Verfahren nach Anspruch 1, **dadurch gekennzeichnet, dass** in der Zusammensetzung das Calciumsulfat höchstens 10 Gew% und vorzugsweise zwischen 3 und 5 Gew% Zement darstellt.

3. Verfahren nach Anspruch 1, **dadurch gekennzeichnet, dass** die Zusammensetzung ein Zusatzmittel umfasst, ausgewählt aus der Gruppe bestehend aus Antisedimentationsmitteln, Stabilisatoren, lufteinbringenden Mitteln und Entschäumungsmitteln.

4. Steinplatte oder Abdeckung, die mit einem Verfahren nach einem der Ansprüche 1 bis 3 erhalten werden kann.

5. Verwendung eines Antischrumpfmittels, das von Anspruch 1 definiert wird, zum Erhalt eines Bauwerks, das eine Steinplatte oder eine Abdeckung umfasst.

## Claims

1. A method for obtaining a structure consisting of a slab or screed, according to which:
- a composition is provided in the dry state comprising a cement and non-shrink agent;
- by mixing water with said composition a concrete or mortar is obtained in the fluid state;
- the concrete or mortar thus obtained is applied and set,
**characterized in that** the non-shrink agent comprises anhydrous calcium sulphate associated with at least one glycol ether, the said glycol ether representing between 0.5 and 3 % by weight of the calcium sulphate.

2. The method according to claim 1 **characterized in that** in said composition the calcium sulphate represents no more than 10 % and preferably between 3 and 5 weight % of the cement.

3. The method according to claim 1 **characterized in that** said composition comprises an additive chosen from the group formed by anti-sedimentation agents, stabilising agents, air entraining agents and anti-foam agents.

4. A slab or screed able to be obtained with a method according to any of claims 1 to 3.

5. The use of a non-shrink agent defined by claim 1 to obtain a structure consisting of a slab or screed.
